# EUROPEAN PATENT APPLICATION

(11) **EP 0 917 052 A1**
(43) Date of publication of application: **19.05.1999**
(21) Application number: 98309279.2
(22) Date of filing: 12.11.1998
(51) Int. Cl.: G06F 9/44

(54) **Method and apparatus for interacting with hardware devices remotely**

(30) Priority: 17.11.1997 US 971737
(71) Applicant: INTERNATIONAL BUSINESS MACHINES CORPORATION, Armonk, NY 10504 (US)
(72) Inventor: Amro, Hatim Yousef, Austin, Texas 78728 (US); Dodson, John Paul, Pflugerville, Texas 78660 (US)
(74) Representative: Burrington, Alan Graham Headford

(57) **Abstract**

A method and apparatus for allowing a user to receive information from as well as program a device from a remote location via the Internet or other communication network. A device capable of being programmed using well known and understood protocols is connected to a computer which is coupled to a server having an HTML page for relaying information pertaining to the device and/or retrieving instructions for programming the device. A user having a laptop or other remote computer downloads the HTML page via the Internet, or other network, and is able to retrieve information concerning the status of the remote device as well as program certain characteristics.

## Description

The present invention generally relates to computer systems, and more particularly, to methods and apparatuses which interact with remote devices via the internet or other similar type network.

The development of computerized distributed information resources, such as the Internet, allows users to link with servers and networks, and thus retrieve vast amounts of electronic information that was previously unavailable using conventional electronic mediums. Such electronic information increasingly is displacing more conventional techniques of information transmission, such as newspapers, magazines, and even television.

The term Internet is an abbreviation for Internetwork, and refers commonly to a collection of computer networks that use the TCP/IP suite of protocols. TCP/IP is an acronym for Transport Control Protocol/Interface Program, a software protocol developed by the US Department of Defense for communication between computers.

Electronic information transferred between computer networks (e.g., the Internet) can be presented to a user in hypertext, a metaphor for presenting information in a manner in which text, images, sounds, and actions become linked together in a complex non-sequential web of associations that permit the user to browse through related topics, regardless of the presented order of the topics. These links are often established by both the author of a hypertext document and by the user.

For example, traveling among hypertext links to the word iron in an article displayed within a graphical user interface might lead the user to the periodic table of the chemical elements (e.g., linked by the word iron), or to a reference to the use of iron in weapons in Europe in the Dark Ages. The term hypertext is used to describe documents, as presented by a computer, that express the non-lineal structure of ideas, as opposed to the linear format of books, film, and speech.

Hypertext, especially in an interactive format where choices are controlled by the user, is structured around the idea of offering a working and learning environment that parallels human thinking -- that is, an environment that allows the user to make associations between topics, rather than moving sequentially from one topic to the next, as in an alphabetic list. In other words, hypertext topics are linked in a manner that allows users to jump from one subject to other related subjects during a search for information.

Networked systems using hypertext conventions typically follow a client/server architecture. A client is a member of a class or group that uses the services of another class or group to which it is not related. In the context of a computer network, such as the Internet, a client is a process (i.e., roughly a program or task) that requests a service which is provided by another program. The client process uses the requested service without having to know any working details about the other program or the service itself. In networked systems, a client is usually a computer that accesses shared network resources provided by another computer (i.e., a server).

A server is typically a remote computer system which is accessible over a communications medium such as the Internet. The server scans and searches for raw (e.g., unprocessed) information sources (e.g., newswire feeds or news groups). Based upon such requests by the user, the server presents filtered electronic information to the user as server responses to the client process. The client process may be active in a second computer system, and communicate with one another over a communications medium that allows multiple clients to take advantage of the information-gathering capabilities of the server.

Clients and servers communicate with one another using the functionality provided by a HyperText Transfer Protocol (HTTP). The World Wide Web (WWW) or, simply, the web, includes all servers adhering to this protocol, which are accessible to clients via a Universal Resource Location (URL). Internet services can be accessed by specifying Universal Resource Locators that have two basic components: a protocol to be used and an object pathname. For example, the Universal Resource Locator address, http://www.uspto.gov (i.e., the home page for the U.S. Patent and Trademark Office), specifies a hypertext transfer protocol (http) and a pathname of the server (www.uspto.gov).

The server name is associated with a unique numeric value (TCP/IP address). Active within the client is a first process, known as a browser, that establishes the connection with the server, and presents information to the user. The server itself executes corresponding server software that presents information to the client in the form of HTTP responses. The HTTP responses correspond to web pages constructed from a Hypertext Markup Language (HTML), or other server-generated data.

A web page (also referred to by some designers simply as a page) is a data file written in a hyper-text language that may have text, graphic images, and even multimedia objects such as sound recordings or move video clips associated with that data file. The web page can be displayed as a viewable object within a computer system. A viewable object can contain one or more components such as spreadsheets, text, hotlinks, pictures, sound, and video objects. A web page can be constructed by loading one or more separate files into an active directory or file structure that is then displayed as a viewable object within a graphical user interface.

When a client workstation sends a request to a server for a web page, the server first transmits (at least partially) the main hypertext file associated with the web page, and then loads, either sequentially or simultaneously, the other files associated with the web page. A given file may be transmitted as several separate pieces via TCP/IP protocol. The constructed web page is then displayed as a viewable object on the workstation monitor. A web page may be larger than the physical size of the monitor screen, and devices such as graphical user interface scroll bars can be utilized by the viewing software (i.e., the browser) to view different portions of the web page.

Most text displayed by a web browser is formatted using standard HTML. An HTML file is a text file that contains both the text to be displayed and markup tags that describe how the text should be formatted by the web browser. The HTML markup tags support basic text formatting, such as paragraph breaks, bullet lists, tables, graphs, charts, and so forth. In addition to these basic text formatting tags, HTML provides tags defining graphical user interface components. HTML also can be used to display well known graphical user interface components such as radio buttons, check boxes, scrolling lists of selectable text, and various other such components at the web browser itself.

As explained above, the Internet has provided a never ending resource for new and innovative concepts for its combined use and need. Currently, there are many tasks that are being conducted at the home or office which typically require some form of human interaction and presence. For example, the programming of a VCR to record a particular broadcast often requires the intervention and presence of the user in order to enter the appropriate information such as station, time, and duration of the event. Often times, the user will either forget to perform the task at all, or to perform the task correctly. Unfortunately, more often than not, this will result in requiring the user to either miss the desired event, or to forfeit the valuable time required to bring their presence back to the location of the equipment in order to conduct the task. Although certain advances in this area have been made, they have been restricted to alleviating the problems associated with the amount of learning required to perform the task. Consequently, even with the advent of these advances, human intervention and presence is still required in order to conduct the desired task.

It would therefore be a distinct advantage to have a method and apparatus that would harness the availability and power of the Internet to eliminate the required human presence in connection with having a particular piece of equipment perform a desire task. The present invention provides such a method and apparatus.

### SUMMARY

A method and apparatus for allowing a user to receive information from as well as program a device from a remote location via the Internet or other communication network. A device capable of being programmed using well known and understood protocols is connected to a computer which is coupled to a server having an HTML page for relaying information pertaining to the device and/or retrieving instructions for programming the device. A user having a laptop or other remote computer downloads the HTML page via the Internet, or other network, and is able to retrieve information concerning the status of the remote device as well as program certain characteristics. The present invention will be better understood and its numerous objects and advantages will become more apparent to those skilled in the art by reference to the following drawings, in conjunction with the accompanying specification, in which:

The novel features believed characteristic of this invention are set forth in the appended claims. The invention itself, however, as well as a preferred mode of use, further objects, and advantages thereof, will best be understood by reference to the following detailed description of a preferred embodiment when read in conjunction with the accompanying drawings, wherein:
FIG. 1 is a diagram of a data processing system in which the present invention can be practiced;
FIG. 2 is a high level block diagram illustrating selected components that can be included in the data processing system of FIG. 1 according to the teachings of the present invention;
FIG. 3 is a block diagram illustrating a typical client/server architecture according to the teachings of the preferred embodiment of the present invention;
FIG. 4 is a schematic diagram illustrating a computer network which can be used in connection with the preferred embodiment of the present invention;
FIG. 5 is a block diagram illustrating an exemplary system which can be used in order to allow the user to remotely communicate and/or control devices according to the teachings of the present invention;
FIG. 6 is a flow chart illustrating the method for allowing a user to remotely control the devices of FIG. 5 via the computer, server, and laptop of FIG. 5 according to the teachings of the present invention;
FIG. 7 is an example of the how the present invention can be used to remotely program a VCR according to the teachings of the present invention;
FIG. 8 is an example of the HTML page for the programming of the VCR of FIG. 7 according to the teachings of the present invention; and
FIG. 9 is an example of how the present invention can be used by a doctor remotely to monitor and/or direct actions toward patients is illustrated according to the teachings of the present invention.

In the following description, numerous specific details are set forth such as specific word or byte lengths, etc., to provide a thorough understanding of the present invention. However, it will be obvious to those of ordinary skill in the art that the present invention can be practiced without such specific details. In other instances, well-known circuits have been shown in block diagram form in order not to obscure the present invention in unnecessary detail. For the most part, details concerning timing considerations and the like have been omitted inasmuch as such details are not necessary to obtain a complete understanding of the present invention, are within the skills of persons of ordinary skill in the relevant art.

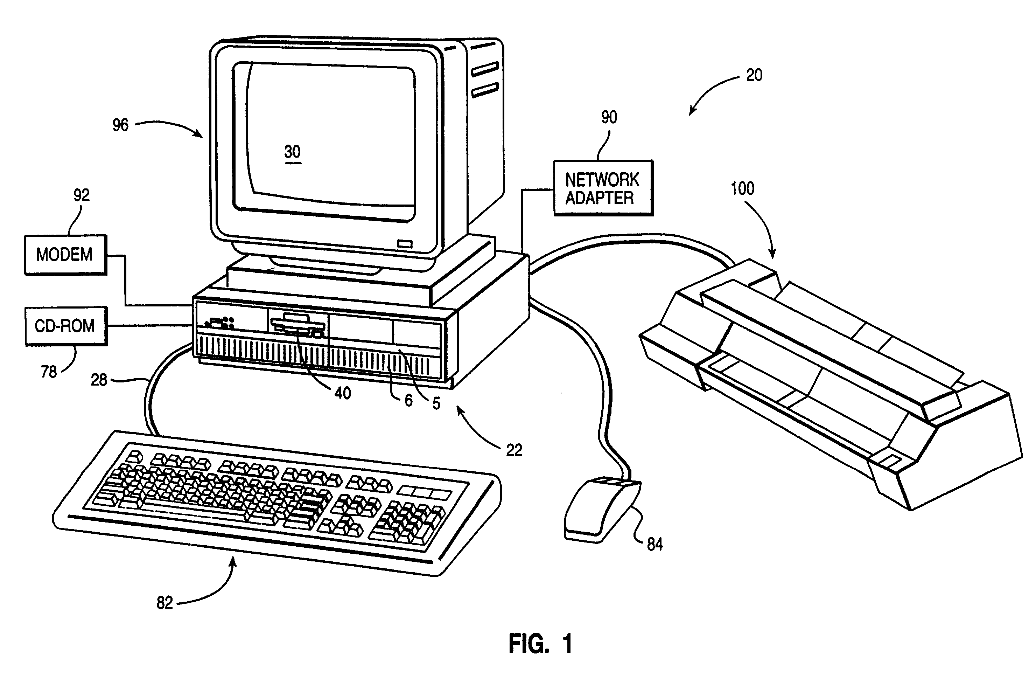

Reference now being made to FIG. 1, a data processing system 20 is shown in which the present invention can be practiced. The data processing system 20 includes processor 22, keyboard 82, and display 96. Keyboard 82 is coupled to processor 22 by a cable 28. Display 96 includes display screen 30, which may be implemented using a cathode ray tube (CRT) a liquid crystal display (LCD) an electrode luminescent panel or the like. The data processing system 20 also includes pointing device 84, which may be implemented using a track ball, a joy stick, touch sensitive tablet or screen, track path, or as illustrated a mouse. The pointing device 84 may be used to move a pointer or cursor on display screen 30. Processor 22 may also be coupled to one or more peripheral devices such as modem 92, CD-ROM 78, network adapter 90, and floppy disk drive 40, each of which may be internal or external to the enclosure or processor 22. An output device such as printer 100 may also be coupled with processor 22.

It should be noted and recognized by those persons of ordinary skill in the art that display 96, keyboard 82, and pointing device 84 may each be implemented using anyone of several known off-the-shelf components.

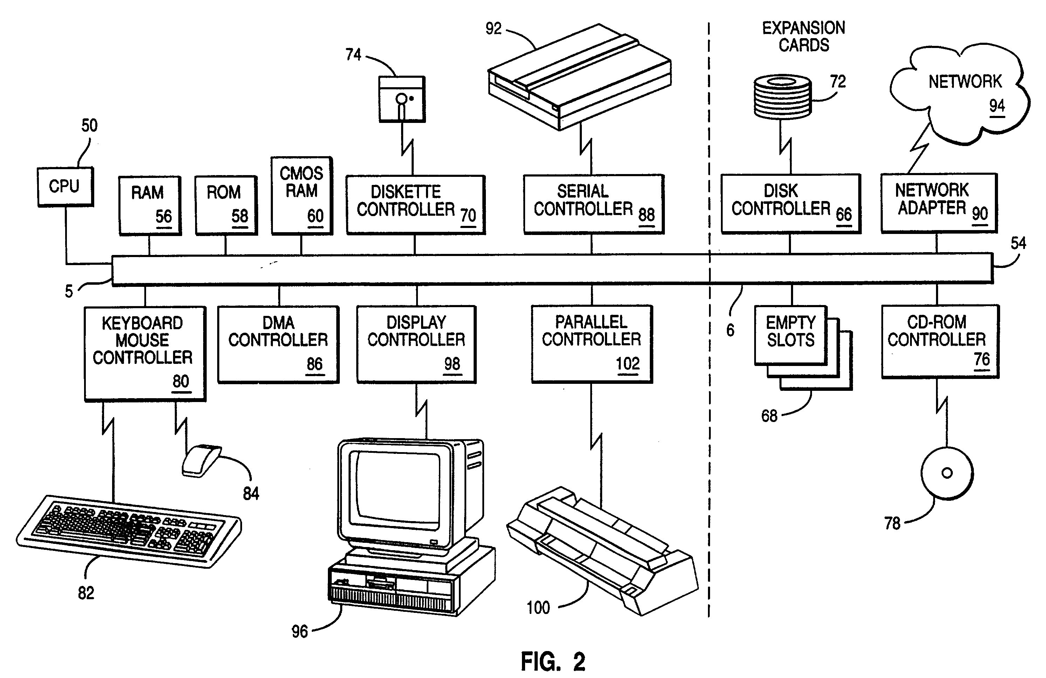

Reference now being made to FIG. 2, a high level block diagram is shown illustrating selected components that can be included in the data processing system 20 of FIG. 1 according to the teachings of the present invention. The data processing system 20 is controlled primarily by computer readable instructions, which can be in the form of software, wherever, or by whatever means such software is stored or accessed. Such software may be executed within the Central Processing Unit (CPU) 50 to cause data processing system 20 to do work.

Memory devices coupled to system bus 5 include Random Access Memory (RAM) 56, Read Only Memory (ROM) 58, and non-volatile memory 60. Such memories include circuitry that allows information to be stored and retrieved. ROMs contain stored data that cannot be modified. Data stored in RAM can be changed by CPU 50 or other hardware devices. Non-volatile memory is memory that does not loose data when power is removed from it. Non-volatile memories include ROM, EPROM, flash memory, or battery-pack CMOS RAM. As shown in FIG. 2, such battery-pack CMOS RAM may be used to store configuration information.

An expansion card or board is a circuit board that includes chips and other electronic components connected that adds functions or resources to the computer. Typically expansion cards add memory, disk-drive controllers 66, video support, parallel and serial ports, and internal modems. For lap top, palm top, and other portable computers, expansion cards usually take the form of PC cards, which are credit card-sized devices designed to plug into a slot in the side or back of a computer. An example such a slot is PCMCIA slot (Personal Computer Memory Card International Association) which defines type 1, 2 and 3 card slots. Thus, empty slots 68 may be used to receive various types of expansion cards or PCMCIA cards.

Disk controller 66 and diskette controller 70 both include special purpose integrated circuits and associated circuitry that direct and control reading from and writing to hard disk drive 72, and a floppy disk or diskette 74, respectively. Such disk controllers handle task such as positioning read/write head, mediating between the drive and the CPU 50, and controlling the transfer information to and from memory. A single disk controller may be able to control more than one disk drive.

CD-ROM controller 76 may be included in data processing 20 for reading data from CD-ROM 78 (compact disk read only memory). Such CD-ROMs use laser optics rather then magnetic means for reading data.

Keyboard mouse controller 80 is provided in data processing system 20 for interfacing with keyboard 82 and pointing device 84. Such pointing devices are typically used to control an on-screen element, such as a cursor, which may take the form of an arrow having a hot spot that specifies the location of the pointer when the user presses a mouse button. Other pointing devices include the graphics tablet, the stylus, the light pin, the joystick, the puck, the trackball, the trackpad, and the pointing device sold under the trademark "TrackPoint" by IBM.

Communication between processing system 20 and other data processing systems may be facilitated by serial controller 88 and network adapter 90, both of which are coupled to system bus 5. Serial controller 88 is used to transmit information between computers, or between a computer and peripheral devices, one bit at a time over a single line. Serial communications can be synchronous (controlled by some standard such as a clock) or asynchronous (managed by the exchange of control signals that govern the flow of information). Examples of serial communication standards include RS-232 interface and the RS-422 interface. As illustrated, such a serial interface may be used to communicate with modem 92. A modem is a communication device that enables a computer to transmit information over a standard telephone line. Modems convert digital computer signals to interlock signals suitable for communications over telephone lines. Modem 92 can be utilized to connect data processing system 20 to an on-line information service, such as an information service provided under the service mark "PRODIGY" by IBM and Sears. Such on-line service providers may offer software that may be down loaded into data processing system 20 via modem 92. Modem 92 may provide a connection to other sources of software, such as server, an electronic bulletin board, the Internet or World Wide Web.

Network adapter 90 may be used to connect data processing system 20 to a local area network 94. Network 94 may provide computer users with means of communicating and transferring software and information electronically. Additionally, network 94 may provide distributed processing, which involves several computers in the sharing of workloads or cooperative efforts in performing a task.

Display 96, which is controlled by display controller 98, is used to display visual output generated by data processing system 20. Such visual output may include text, graphics, animated graphics, and video. Display 96 may be implemented with CRT-based video display, an LCD-based flat panel display, or a gas plasma-based flat-panel display. Display controller 98 includes electronic components required to generate a video signal that is sent to display 96.

Printer 100 may be coupled to data processing system 20 via parallel controller 102. Printer 100 is used to put text or a computer-generated image on paper or on another medium, such as transparency. Other type of printers may include an image setter, a plotter, or a film recorder.

Parallel controller 102 is used to send multiple data and control bits simultaneously over wires connected between system bus 5 and another parallel communication device, such as printer 100.

CPU 50 fetches, decodes, and executes instructions, and transfers information to and from other resources via the computers main data-transfer path, system bus 5. Such a bus connects the components in a data processing system 20 and defines the medium for data exchange. System bus 5 connects together and allows for the exchange of data between memory units 56, 58, and 60, CPU 50, and other devices as shown in FIG 2.

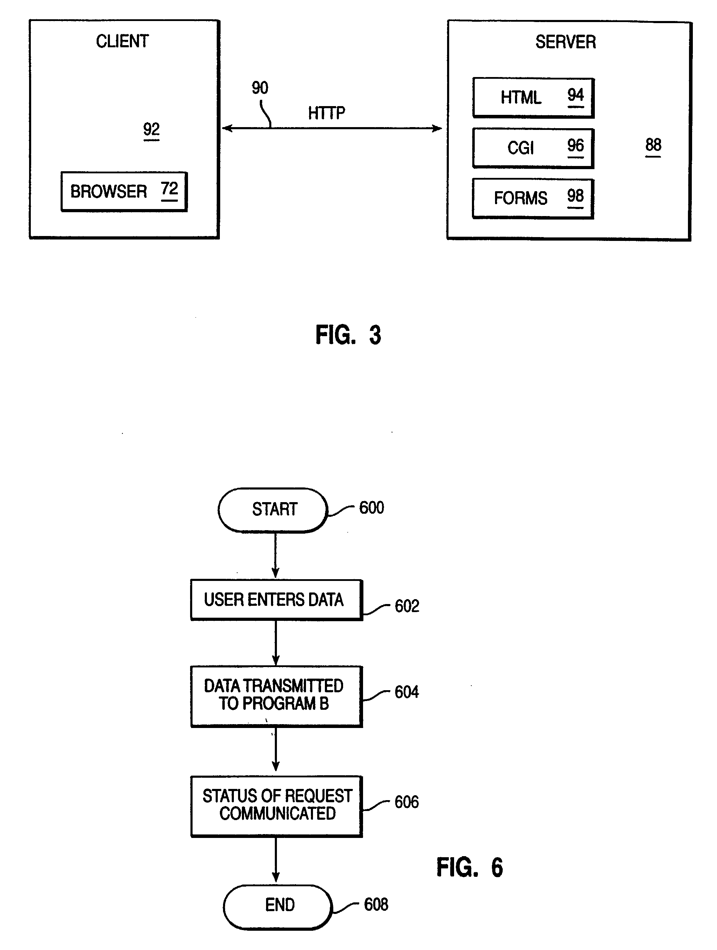

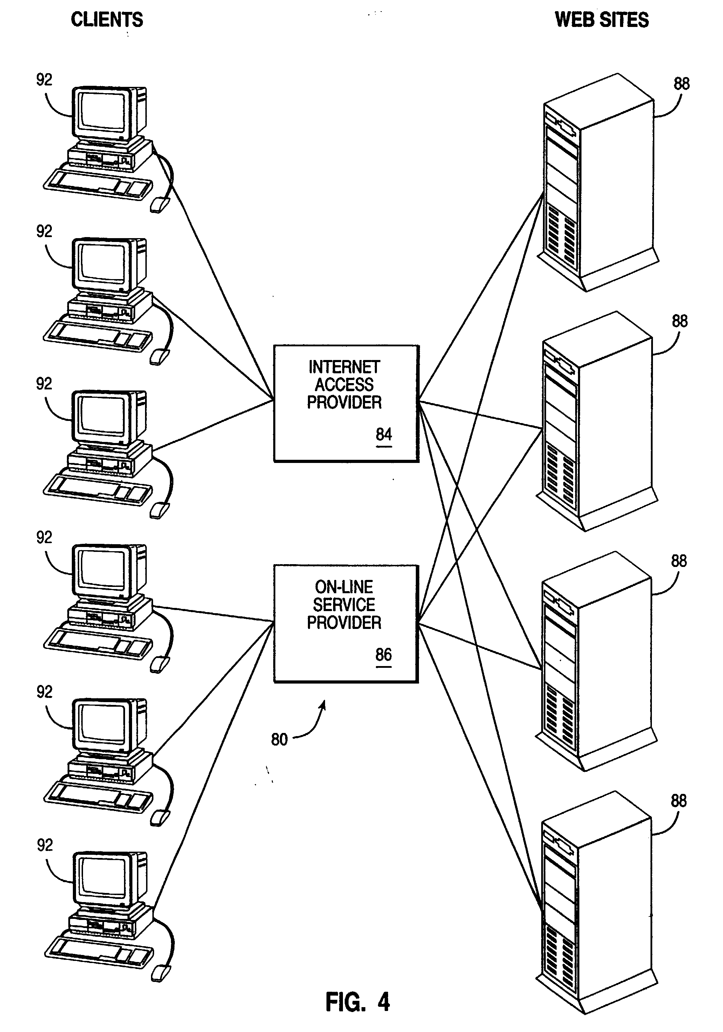

The present invention combines the use of the Internet or other network in combination with software in order to gather information, and control hardware devices, which typically require human intervention and presence, remotely as explained in greater detail hereinafter. Those skilled in the art readily recognize that the Internet, and most other networks for that matter, is premised upon basic client/server architecture. Figures 3 and 4 in combination with their corresponding descriptions portray this architecture in its most basic state.

Reference now being made to FIG. 3, a block diagram is shown illustrating a typical client/server architecture according to the teachings of the preferred embodiment of the present invention. As noted by designation 90, client 92 and Server 88 communicate with one another using the functionality of the HTTP protocol as previously explained. Active within client 92 is a browser 72 which can be used to establish connections with server 88, as well as, present information to the user.

Server 88 executes server software (not shown) which presents information to the client, via the browser 72, in the form of HTTP responses 90. The HTTP responses correspond to web pages that are represented using HTML, or other data generated by server 88. Under certain browsers, a Common Gateway Interface (CGI) 96 is also provided, which allows the client program to direct server 88 to commence execution of a specified program contained within server 88 (e.g. a program to relay information for programming a VCR). Using this interface, and HTTP responses 90, the server 88 can notify the client 92 of any information required or generated as a result of executing the specified program. Common Gateway Interface (CGI) 96 is one form of a gateway, a device used to connect dissimilar networks (i.e. networks using different communications protocols) so that electronic information can be passed from one network to the other. Gateways transfer electronic information, converting such information to a form compatible with the protocols used by the differing network for transport and delivery.

Reference now being made to FIG. 4, a schematic diagram is shown illustrating a computer network 80 which can be used in connection with the preferred embodiment of the present invention. Computer Network 80 is representative of the Internet, which can be described as a known computer network based on the client-server model previously discussed in connection with FIG. 3. It should be noted, however, that the construction of the present invention is not to be limited to any particular network, and is equally applicable to other networks such as intranets.

Conceptually, the Internet includes a large network of servers 88 that are accessible by clients 92, typically users of personal computers, through some private Internet access provider 84 (e.g. such as Internet America) or an on-line service provider 86 (e.g. American On Line, Prodigy, or CompuServe). Each of the clients 92 can run a browser to access servers 88 via the access providers 84 or 86. Each server 88 operates a so-called web site that supports files in the form of documents and pages. A network path to servers 88 Is identified by a Universal Resource Locator having a known syntax for defining a network collection.

The present invention provides an individual with the ability to receive information from devices which are remotely located as well as direct them to perform desired tasks. The internet is currently the preferred medium for conducting the transfer of the above noted information, however, it should be clearly understood that applicability of the present invention to other similar and dissimilar networks is also contemplated.

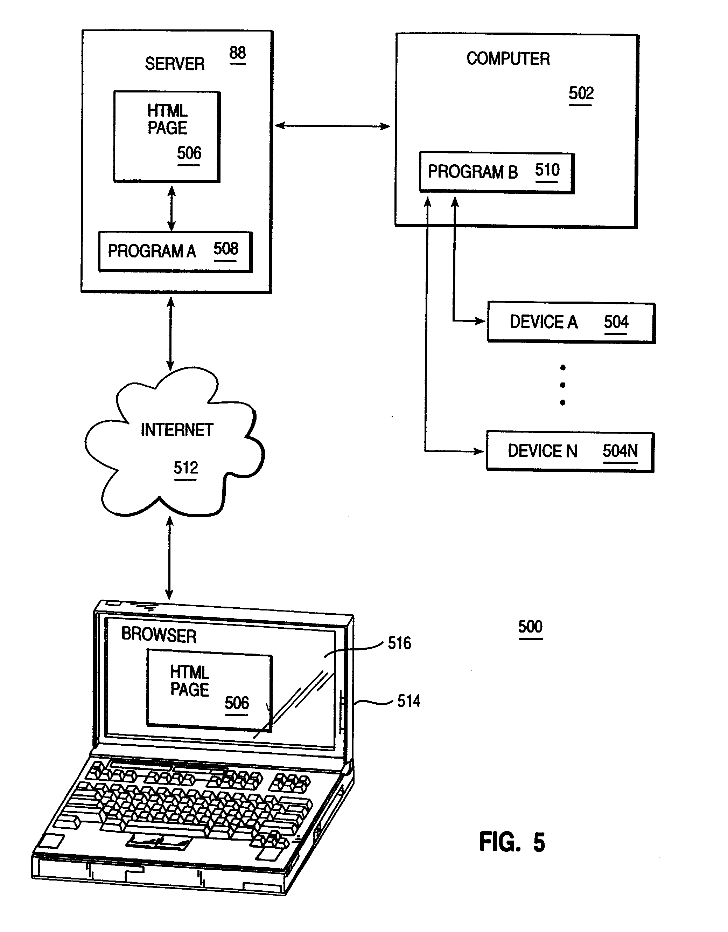

Reference now being made to FIG. 5, a block diagram is shown of an exemplary system 500 which can be used in order to allow the user to remotely communicate and/or control devices 504-N according to the teachings of the present invention. In the noted example, the user (not shown) is using a laptop 514. It should be understood, however, that any conventional information handling system capable of communicating over the internet or other network can also be used.

In this example, the user has connected to the Internet 512 using well understood and known techniques as previously described. Executing on laptop 514 is web browser 516 which is used for communicating to computers connected to the Internet 512. In this example, the user desires to communicate with server 88, and more specifically, to retrieve the HTML page 506 located thereon. As previously explained, this is accomplished by specifying the URL of the HTML page 506 to web browser 516. Once the user has specified the desired URL, communication over the Internet is established, and ultimately HTML page 506 is loaded into web browser 516.

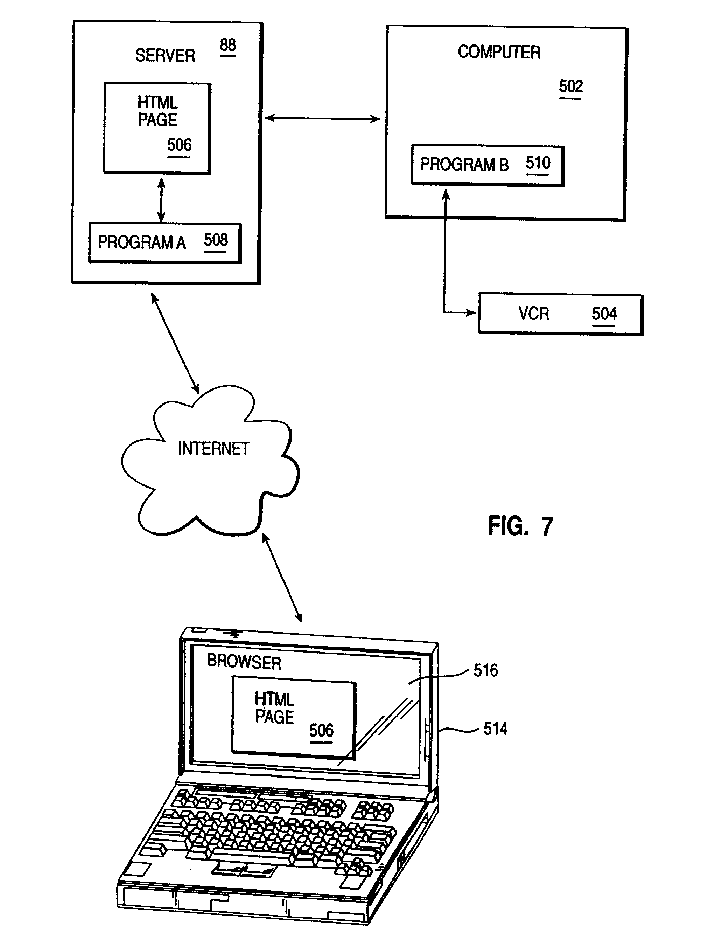

HTML page 506 is responsible for displaying and/or retrieving information from one or more of devices 504-N. HTML page 506 communicates with program B 510 over a standard network type medium (e.g. ethernet, lan, wan, etc..) to either communicate desired changes or retrieve information from the corresponding devices 504-N. Program B 510 can be provided by the manufacturers of devices 504-n or some third party. Regardless, program B 510 needs to be able to communicate the desired characteristics for each of the devices 504-n. For example, in the scenario where one of the devices 504 is a VCR, program B 510 needs the ability to be able to communicate the characteristics such as channel, time, and duration for the desired event. In addition, program B 510 must also be capable of transmitting this information to program A 508 which in turn relays the information to HTML page 506. Information concerning the various steps involved to establish either the displaying or programming of information from/to devices 504-N are explained in greater detail in connection with the description of FIG. 6.

Reference now being made to FIG. 6, a flow chart is shown illustrating the method for allowing a user to remotely control devices 504-N via computer 502, server 88, and laptop 514 according to the teachings of the present invention. The method begins at step 600 where the user has specified the URL for HTML page 506, and consequently, the contents of HTML page 506 are displayed in web browser 516. The method then proceeds to step 602 where the user enters in the required data for the corresponding device(s) 504-N.

The method then proceeds to step 508 where the entered data is transferred over the Internet 512 and received by server 88 via program A 508. Program A 508 then forwards the data to the computer 502 which is received by program B 510. Program B 510 then transmits this data to the intended device(s) 504-N using the appropriate protocol.

The method then proceeds to step 606 where the intended device(s) 504-N report to Program B 510 whether the desired results where achieved. Program B 510 then informs Program A 508 which in turn notifies the user via HTML page 506 whether the intended results where successful. The method then proceeds to end at step 608.

Various examples of the present invention are provided hereinafter in order to further illustrate the numerous applications for which the present invention can be applied. It should be noted, however, that these are merely examples and not to be considered exhaustive of the applicablity of the present invention.

Reference now being made to FIG. 7, an example of the how the present invention can be used to remotely program a VCR 504 is shown according to the teachings of the present invention. Communication between computer 502, server 88, and laptop 514 is in accordance with that which was previously explained in connection with FIGs. 5-6.

As noted in FIG. 7, VCR 504 has been connected to computer 502 using a communication medium such as LANC, ViSCA, RS-422, RS-232 or the like. The user can either view the information concerning the current programming status of VCR 504, or alter that status by loading HTML page 506. Those skilled in the art will readily recognize that the particular layout and function of HTML page 506 are dictated by the particular device(s) to which it corresponds. In this example, HTML page 506 is designed so as to relay information pertaining to the programming of VCR 504.

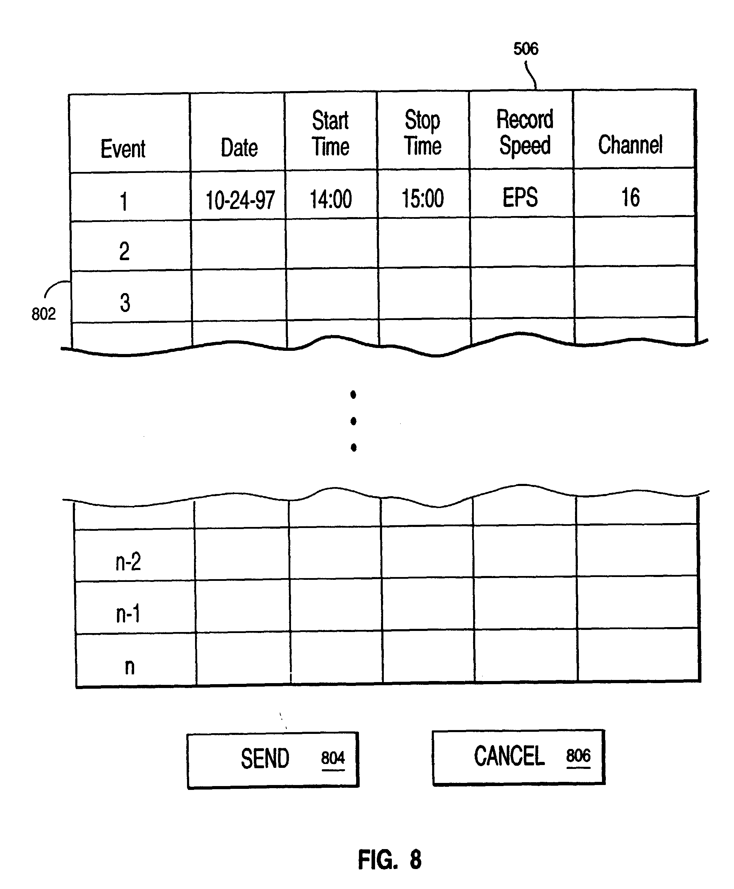

Reference now being made to FIG. 8, an example of the HTML page 506 for the programming of the VCR 504 of FIG. 7 is shown according to the teachings of the present invention. As noted thereon, HTML page 506 includes a table 802 for entering information such as the particular event to be programmed, the date, start time, stop time, recording speed, and channel, of the corresponding event. In addition, HTML page 506 also includes send and cancel buttons 804 and 806, respectively for either transmitting the information or canceling previously changes thereto.

Referring now back to FIG. 6, a description of the flow chart for the example of FIG. 8 is explained in accordance with the teachings of the present invention. The method begins when the user directs the web browser 516 to the HTML page 506 residing on server 88 via the appropriate URL(step 600). Assuming that the appropriate communication has been established, then HTML page 506 is loaded into the web browser 516. Thereafter, the user enters in the appropriate information into table 802 for the programming of the desired events.

After the user has finished entering the desired information into table 802, they may either cancel the changes just made via cancel button 806, or proceed to program the VCR 504 remotely via send button 804. Assuming that the user has selected the send button 804, the newly entered information is transmitted to program B 510 as previously discussed in connection with FIG. 6 (step 604). After the VCR 504 has received the information, it either accepts or rejects the suggested programming and informs program B 510. Program B 510, then informs the user of either the acceptance or rejection of the desired programming (step 608) as explained previously in connection with FIG. 6.

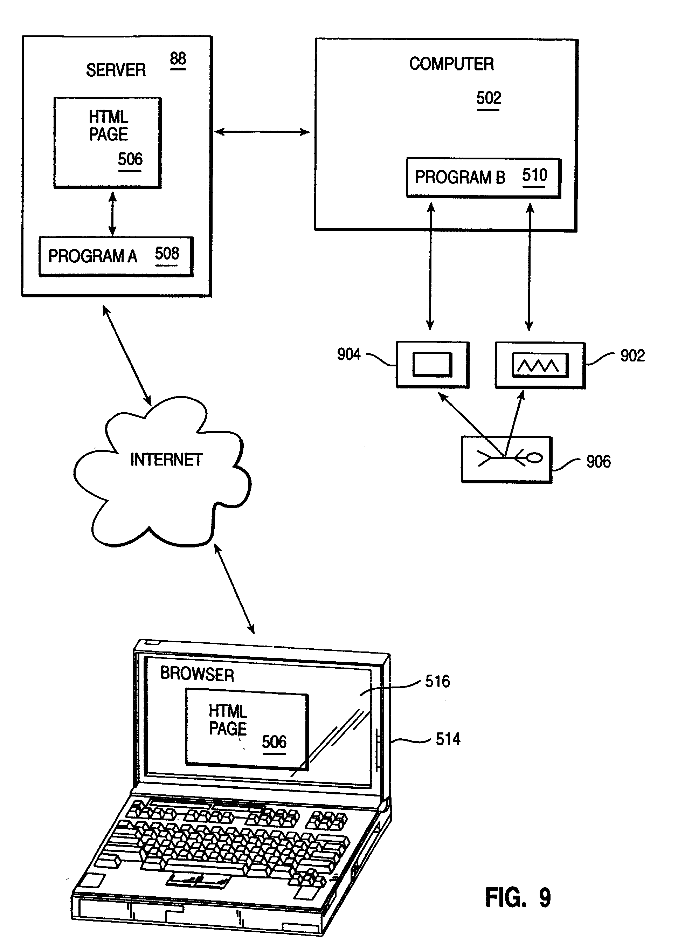

Reference now being made to FIG. 9, an example of how the present invention can be used by a doctor remotely to monitor and/or direct actions toward patients is illustrated according to the teachings of the present invention. The connections and communication between laptop 514, server 88, and computer 502 which were previously discussed in connection with FIGs 5-6 are applicable to the current example, and therefore, further discussion deemed unnecessary and redundant.

A doctor, or any other type of health care worker, who desires to know the current status of a patient(s) assigned to their care can use the present invention to remotely retrieve the status as well as communicate any desired changes and/or directions. More specifically, the doctor can use the Internet 512 and web browser 516 to load an HTML page 506 from server 88 to receive current information from devices directly attached to the patient 906, such as a heart monitor 902 or other health care monitoring device 904. The doctor can then use this information to inform responsible health care workers what action to take during their absence or to alleviate any concerns they may develop once they have left the health care facility.

## Claims

1. A method of remotely controlling a device over the internet, the method comprising the steps of:
retrieving the current status of the device via the internet;
displaying the status in a web browser;
retrieving information from a user via the web browser for programming the device; and
transmitting the programming information to the device via the internet; and programming the device according to the transmitted instructions.

2. Apparatus for remotely controlling a device over the internet comprising a browser (72) and a server (88) connectible via the internet (90), characterised by means for retrieving the current status of the device via the internet, means for initiating the display of the status in the browser, means for retrieving information from a user via the browser for programming the device, and means for transmitting information to the device via the internet and programming the device according to the transmitted instructions.

3. Apparatus for remotely controlling a device over the internet comprising a user module (92) and a server (88) capable of communication with one another using the functionality of the hypertext-transfer protocol (HTTP), characterised by a browser (72) active within the user module for initiating connections with the server (88) as well as presenting information to the user.
